Europäisches Patentamt

European Patent Office

Office européen des brevets

(11) Publication number: **0 218 557**
A2

# (12) EUROPEAN PATENT APPLICATION

(21) Application number: **86830265.4**

(22) Date of filing: **01.10.86**

(51) Int. Cl.⁴: **B 60 R 16/02**

(30) Priority: **01.10.85 IT 2231885**

(43) Date of publication of application: **15.04.87**
**Bulletin 87/16**

(84) Designated Contracting States: **DE ES FR GB**

(71) Applicant: **CAVIS CAVETTI ISOLATI S.p.A., Via Roma, 31, I-15023 Felizzano (Alessandria) (IT)**

(72) Inventor: **Codrino, Giuseppe, Via Stazione, 2, I-15028 Quattordio (Alessandria) (IT)**

(74) Representative: **Cicogna, Franco, Ufficio Internazionale Brevetti Dott.Prof. Franco Cicogna Via Visconti di Modrone, 14/A, I-20122 Milano (IT)**

(54) **Electronic apparatus operable to control all the electrical services of a motor vehicle via a single or double cable.**

(57) This relates to electronic apparatus suitably designed for the control of motor vehicle electrical services generally, via a single or double cable.

This electronic apparatus essentially comprises a suitably programmed central processing unit.

The said central unit receives information sent from peripheral units operated by the user, takes the appropriate decisions on the basis of the programme stored, and sends relevant controls to peripherals capable of actuating the individual services.

These peripheral and central units communicate together via a single or double wire along which a conveniently coded signal is passed.

"Electronic apparatus operable to control all the electrical services of a motor vehicle via a single or double cable"

The subject of the present invention is constituted by electronic apparatus operable to control all the electrical services of a motor vehicle via a single or double cable.

As is known, on vehicles there is normally provided an electrical installation able to supply a plurality of services essential for a correct utilisation of the vehicles themselves.

It is likewise known, however, that the supply and control of such services are conventionally effected by means of a bundle of cables constituting an equivalent number of different electrical circuits.

Obviously, the arrangement and assembly of the said circuits requires considerable operating time and a not inconsiderable use of qualified labour, with the consequent effect on the final production costs.

Moreover, this manner of proceeding can easily lead, notwithstanding the attention of the operators, to the formation of eroneous connections, or at least to the production of installations of low reliability.

The object of the present invention is that of eliminating the previously indicated disadvantages by providing electronic apparatus for the control of electrical services of a vehicle in general, which will be able to allow a drastic reduction in the time necessary for making the interconnections between the various circuits which govern the operation of the services themselves.

Within the scope of the aforesaid object, a particular object of the present invention is that of providing eletronic apparatus for controlling the electrical services of a vehicle in general, which is of maximum reliability and which allows a wide flexibility in use.

Another object of the present invention is that of providing electronic apparatus for controlling electrical services of a vehicle in general, which is easy to maintain.

The said object, as well as the above-listed objects and others which will possibly become apparent hereinbelow, are achieved according to the invention by electronic apparatus for the control of electrical services of a vehicle in general, characterised by the fact that it essentially comprises a suitably programmed central processing unit which receives information sent from various peripheral units operated by the user, takes the appropriate decisions according to the stored programme and sends relevant commands to peripherals capable of actuating the individual services; such peripheral and central units communicate together by means of a single or double wire along which passes a conveniently coded signal.

Further characteristics and advantages of the electronic apparatus which constitutes the subject of the present Patent of invention can be better understood with the aid of the following description, complemented by the attached drawings, in which:

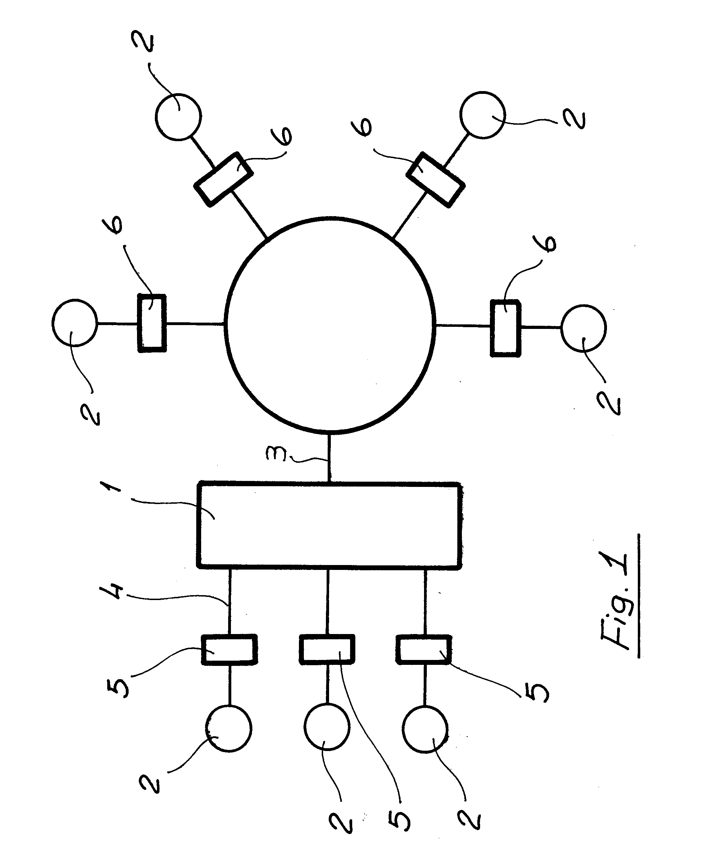

In Figure 1 there is shown, purely by way of indication, a practical scheme for realising the apparatus.

With particular reference to the numerical symbols of the said figures, the subject electronic apparatus for the control of electrical services of a vehicle in general, comprises a central processing unit 1 which is entrusted with the function of receiving the information from the various peripheral units 2 taking the appropriate decisions on the basis of a preliminary programming, and sending the relevant commands to the peripherals themselves.

It is appropriate, by the way, to state that by "peripherals" are intended also those units which send on commands from the driver or other operators.

The transmission takes place on the wire 3 for output signals, and on the second wire 4 for input signals, whilst a single cable (not specifically shown) provides for the supply both of the electronic parts and of the various utilisers involved.

To this end, obviously, the connection between the central unit and the peripheral units is obtained by a serial connection able to allow pulses or "bits" to be sent one at a time along the same wire regularly spaced in time.

It is further provided that the devices 5 with which the signals are effectively coded work at two levels of complexity:

- the signal is constituted by a "packet" of equal pulses which give a code between 0 and 255; this code can be checked by means of a counter, to obtain the precise number transmitted;
- the signal is also considered as a whole, as length; in this way the exact transmitted value is not known, but it is possible to identify a certain number of functions according to the length of the signal itself (length of the "packet" of pulses).

Obviously, the quantity of functions identifiable depends on the precision of the various receiving circuits or decoders 6 so that it is possible to optimise the cost of the circuits themselves in dependence on their specific requirements.

In substance, if, by way of example, a peripheral unit has to be able to identify one out of eight different commands, its receiving part will have a precision such as to distinguish eight different lengths of the packet of pulses; vice versa, if it must identify one out of twenty of them, it will be structured in such a way as to be able to distinguish twenty different lengths, and so on.

Moreover, it is envisaged sending on the said output wire, between one signal and another, a command operable to select the different peripheral units.

This command consists, in practice, of a pulse of pre-determined duration different from that of the previous signals, capable of causing the counters of the various receivers to advance.

More precisely, each peripheral unit is actuated only upon a pre-determined count, for example three, and will not be actuated by commands which arrive at it when the address counter is not in position three.

In the same way, further count pulses can be provided, operable to select an individual utiliser within a peripheral unit generally.

Moreover, the possibility can be provided of controlling individual utilisers by decoding the command signal as if it were an address.

This procedure is particularly advantageous when the commands to be sent are only of the "on/off" type since this allows all the commands which can be sent to the services to be utilised better.

In general, the present apparatus with the processing unit of known type is able to control sixteen peripherals each of which can have sixteen utilisers.

These latter, in particular, can also be all made of analogue type by utilising a corresponding number of digital-to-analogue converters in such a way as to be able each to receive 256 different signals.

The total operating capacity of the apparatus can

0218557

- 6 -

consequently vary from 256 analogue utilisers to more than 4,000 "on/off" utilisers, with the widest freedom of configuration between these two numbers.

Moreover, the possibility of utilising, for the connections, either copper wire or optical fibre is also envisaged, with the simple introduction of an appropriate transducer. The particular address system for the signals also permits the peripheral units to be positioned at any point in the network.

The configuration of this latter is consequently unrestricted thanks to the presence of the address decoders which are designed to be separate from the individual peripheral units or "sub stations".

By means of this arrangement, in practice, the network can assume either a loop configuration or a star configuration or any of the most widely varied mixed configurations.

It is appropriate, by the way, to emphasise that the use of the apparatus in question allows peripheral units or sub stations including several services to be formed, such as, for example, in the case of a motor vehicle:
- a sub-station for controlling the front light unit;
- a sub-station for controlling the rear light unit;
- a seat control sub-station;
- a door control sub-station;
- a sub-station for controlling the roof light and interior light unit.

Moreover, these sub-stations are independent of the type of vehicle on which they must be mounted, making it possible to avoid a specific different design for each type of vehicle.

With respect to conventional electrical service control systems there are many advantages offered by the present apparatus and these are of significant economical importance.

By way of example, as far as the design sector is concerned, it is possible to have a smaller work load, less expenditure of time for definition of the design and a greater security in the functional characteristics thereof.

Equally, as far as the safety sector is concerned, the components are more reliable; there is the possibility of self-regulation of the system; the possibility that the peripheral units will remain in or will put themselves in pre-determined states in the absence of communication; the possibility of replacing essential functions with others (for example reversing light lamps in substitution for the direction indicators when these latter are broken); the possibility of modulating the signals from the luminous indicators without increasing costs.

Moreover, in theory there will be smaller assembly costs for the whole unit; a practical elimination of incorrect connections and less space required for storage of components.

From what has been described hereinabove, and from observation of the attached drawing, the great functionality and practicality in use which characterises the electronic apparatus constituting the subject of the present Patent of invention will be apparent, such electronic apparatus being operable to control all the electrical services of the vehicle.

Obviously, this apparatus has been described and illustrated hereinabove purely by way of indicative, but non-limitative example, and only for the purpose of demonstrating the practicability and general characteristics of the present invention so that all those variants and modifications within the scope of an expert in the art and susceptible of being brought within the ambit of the inventive concept explained above can be introduced thereto.

- 9 -

Claims:

1. Electronic apparatus for the control of electrical services of a vehicle, characterised by the fact that it essentially comprises a suitably programmed central processing unit which receives information sent from various peripheral units operated by the user, takes appropriate decisions on the basis of the stored programme, and sends commands relating to the peripherals for actuating the individual services; such peripheral units and the central unit communicate together by means of a single or double wire along which is passed a conveniently coded signal.

2. Electronic apparatus as in the preceding Claim, characterised by the fact that the transmission of the said coded signals takes place on one wire for output signals and on a second wire for input signals, whilst a single cable provides for the supply both of the electronic parts and the various utilisers involved.

3. Electronic apparatus as in one or more of the preceding Claims, characterised by the fact that the connection between the said central unit and the peripheral units is obtained by means of a serial connection able to allow pulse signals to be sent one at a time along the same wire at regular time intervals.

4. Electronic apparatus as in one or more of the preceding Claims, characterised by the fact that the coding devices therein work at two levels of complexity definable thus:
- the signal is constituted by a "packet" of equal pulses which give a code between 0 and 255; this code can be checked by a counter to obtain the precise number transmitted;

- the signal can also be considered as a whole in terms of its length; in this way the exact value transmitted is not known, but it is possible to identify a certain number of functions according to the length of the signal itself (length of the "packet" of pulses).

5. Electronic apparatus as in one or more of the preceding Claims, characterised by the fact that the precision of the various receiving or decoding circuits therein can be optimised in dependence on the specific requirements.

6. Electronic apparatus as in one or more of the preceding Claims, characterised by the fact that on the said output wire, between one signal and another, there is sent a command operable to select the various peripheral units; this command substantially comprises a pulse of pre-determined duration able to advance the counters of the various receiving units.

7. Electronic apparatus as in one or more of the preceding Claims, characterised by the fact that there can be provided a further pulse counter therein operable to select a single utiliser within a general peripheral unit; further, there can be provided the possibility of controlling individual utilisers by decoding the command signal as if it were an address.

8. Electronic apparatus as in one or more of the preceding Claims, characterised by the fact that the particular address system provided therein permits the peripheral units to be positioned at any point in the network; the configuration of this latter consequently is unrestricted thanks to the presence of the address decoders which are separate from the individual peripheral units.

Fig. 1

0218557